# FASCICULE DE BREVET EUROPEEN

(11) **EP 3 962 813 B1**
(45) Date de publication et mention de la délivrance du brevet: **01.03.2023**
(21) Numéro de dépôt: 20740369.2
(22) Date de dépôt: 02.06.2020
(51) Int. Cl.: B64D 29/06

(54) **SYSTÈME À INDICATEUR DE VERROUILLAGE D'UN ÉLÉMENT DE NACELLE, COMPRENANT UNE CLÉ AMOVIBLE DE VERROUILLAGE ET DE COMMANDE DE L'INDICATEUR**
SYSTEM MIT VERRIEGELUNGSANZEIGER FÜR EIN GONDELELEMENT MIT EINEM ABNEHMBAREN SCHLÜSSEL ZUM VERRIEGELN UND STEUERN DES INDIKATORS
SYSTEM WITH LOCKING INDICATOR FOR A NACELLE ELEMENT, COMPRISING A REMOVABLE KEY FOR LOCKING AND CONTROLLING THE INDICATOR

(30) Priorité: 04.06.2019 FR 1905907
(43) Date de publication de la demande: 09.03.2022
(73) Titulaire: Safran Nacelles, 76700 Gonfreville-l'Orcher (FR)
(72) Inventeur: PASCAL, Sébastien Laurent Marie, 77550 MOISSY-CRAMAYEL (FR); PHI, Alexandre, 77550 MOISSY-CRAMAYEL (FR); PEYRON, Vincent Jean-François, 77550 MOISSY-CRAMAYEL (FR)
(74) Mandataire: Brevalex
(86) Numéro de dépôt international: PCT/FR2020/050937
(87) Numéro de publication internationale: WO 2020/245535

(56) Documents cités:
- WO-A1-85/03971
- US-A1- 2009 173 823
- US-A1- 2015 184 544

## Description

### Domaine technique

L'invention se rapporte au domaine des dispositifs de verrouillage d'un élément de nacelle d'ensemble propulsif d'aéronef, par exemple un élément de nacelle mobile tel qu'un capot de soufflante. L'invention concerne plus spécifiquement la détection par un pilote ou un opérateur du verrouillage effectif d'un tel élément de nacelle.

### État de la technique antérieure

Une nacelle d'ensemble propulsif d'aéronef comprend généralement des capots mobiles entre une position de vol, dans laquelle ceux-ci assurent une continuité aérodynamique avec les autres éléments de capotage de la nacelle, et une position de maintenance permettant à un opérateur d'accéder au moteur pour réaliser une opération de maintenance.

Pour verrouiller les capots en position de vol, ceux-ci sont équipés de dispositifs de verrouillage tel celui décrit dans le document FR 3 015 953 A1.

Avant une mission de vol, il est nécessaire de s'assurer que les capots mobiles soient correctement verrouillés en position de vol et les autorités de certification aéronautique exigent notamment un moyen de détection fiable de ce verrouillage.

Le dispositif de verrouillage décrit dans le document FR 3 015 953 A1 comprend à cet effet une clé équipée d'un drapeau (cf. figure 9 de ce document, référence 160) destiné à améliorer sa visibilité et à réduire ainsi le risque d'oubli de verrouillage et de retrait de la clé après verrouillage.

Un tel moyen de détection nécessite un contrôle visuel in situ ne permettant pas au pilote de s'assurer du bon verrouillage des capots lors de la procédure de vérification préalable au décollage, celle-ci étant réalisée au sein de la cabine de pilotage.

Une autre technique conventionnelle consiste à émettre un signal visuel dans la cabine de pilotage tant que les verrous des capots ne sont pas verrouillés. Des exemples d'une telle technique sont décrits dans les documents FR 3 007 390 A1, EP 2 829 474 B1 et US 2011/0018741 A1.

Les techniques d'émission de signal visuel conventionnelles nécessitent un système logiciel de traitement de signal coûteux, ainsi qu'un système de convoyage de signaux entre les verrous et la cabine de pilotage, typiquement via des harnais, ce qui augmente notamment la masse de l'aéronef.

### Exposé de l'invention

L'invention vise à procurer un système capable de fournir une indication de verrouillage ou de non-verrouillage qui soit fiable, tout en remédiant aux inconvénients précités.

A cet effet, l'invention a pour objet un ensemble pour aéronef, cet ensemble comprenant :
- un premier élément de nacelle tel qu'un capot pouvant être placé dans une position de vol par rapport à un deuxième élément de nacelle,
- un dispositif de verrouillage mobile entre une position de verrouillage apte à maintenir le premier élément de nacelle en position de vol et une position de déverrouillage apte à libérer le premier élément de nacelle,
- une clé configurée pour coopérer avec le dispositif de verrouillage de manière à déplacer celui-ci entre la position de verrouillage et la position de déverrouillage, la clé pouvant être retirée du dispositif de verrouillage uniquement lorsque celui-ci est en position de verrouillage,
- un indicateur de position du dispositif de verrouillage, cet indicateur pouvant prendre un premier et un deuxième état.

Selon l'invention, cet ensemble comprend un dispositif de commande configuré pour être activé et/ou désactivé par ladite clé lorsque celle-ci est retirée du dispositif de verrouillage, l'activation du dispositif de commande entraînant un passage de l'indicateur du premier au deuxième état.

Un tel ensemble, ou système, permet de fournir une indication de verrouillage fiable.

D'une part en effet, le changement d'état de l'indicateur résulte d'un changement d'état du dispositif de commande sous l'action de la clé servant à verrouiller ou déverrouiller le dispositif de verrouillage lorsqu'elle est retirée du dispositif de verrouillage, c'est-à-dire ne coopère plus avec celui-ci, cette clé ne pouvant être retirée du dispositif de verrouillage que lorsque celui-ci est en position de verrouillage.

Le dispositif de commande peut en effet prendre un état d'activation - dispositif de commande activé - et un état de désactivation - dispositif de commande désactivé. Le passage de l'état de désactivation à l'état d'activation entraînant un passage de l'indicateur du premier au deuxième état.

D'autre part, l'invention ne nécessite aucunement de relier le dispositif de verrouillage à l'indicateur ou au dispositif de commande, ce qui permet de s'affranchir de tout système de convoyage de signaux entre le dispositif de verrouillage et l'indicateur, ou entre les dispositifs de verrouillage et de commande, et de s'affranchir de tout système logiciel de traitement de signal correspondant.

Le dispositif de verrouillage peut être un dispositif de verrouillage conventionnel tel que celui décrit dans le document FR 3 015 953 A1.

Ladite position de déverrouillage du dispositif de verrouillage est une position permettant de modifier la position dudit premier élément de nacelle, avec ou sans action supplémentaire sur le dispositif de verrouillage.

Par exemple, le dispositif de verrouillage peut être configuré de manière à rester dans une configuration d'enclenchement lorsque celui-ci est déplacé entre la position de verrouillage et la position de déverrouillage, configuration dans laquelle un élément de ce dispositif maintient le premier élément de nacelle en position de vol. Dans cet exemple, le dispositif de verrouillage peut être configuré pour être placé, à partir de la position de déverrouillage, dans une configuration de désenclenchement dans laquelle le premier élément de nacelle est libéré et peut par conséquent être déplacé de la position de vol vers une autre position. Le passage de la configuration d'enclenchement à la configuration de désenclenchement peut être réalisé avec ou sans action d'un opérateur sur la clé. Bien entendu, la clé ne peut pas non plus être retirée du dispositif de verrouillage lorsque celui-ci est dans la configuration de désenclenchement.

Selon une première variante de réalisation, le dispositif de commande peut être configuré pour être actionné mécaniquement par la clé.

Autrement dit, le dispositif de commande peut être configuré pour être activé et/ou désactivé par déplacement d'un élément de ce dispositif de commande avec la clé.

Selon une deuxième variante de réalisation, le dispositif de commande peut être configuré pour être actionné à distance par la clé, par exemple par radio-identification.

En cas d'actionnement à distance, il est nécessaire de configurer le dispositif de commande et le dispositif de verrouillage, et/ou de configurer la clé, de sorte que la clé ne puisse pas communiquer avec le dispositif de commande lorsqu'elle n'est pas retirée du dispositif de verrouillage.

Dans un mode de réalisation, le dispositif de commande peut être configuré de sorte que la clé ne puisse pas être retirée du dispositif de commande lorsque celui-ci est dans la deuxième position.

Une telle configuration empêche une utilisation de la clé pour déverrouiller le dispositif de verrouillage lorsque le dispositif de commande est activé, évitant ainsi que l'indicateur soit dans le deuxième état lorsque le dispositif de verrouillage n'est pas verrouillé.

Dans un mode de réalisation, le dispositif de commande peut comprendre un interrupteur.

L'interrupteur peut constituer ledit élément du dispositif de commande déplacé par la clé de manière à activer/désactiver le dispositif de commande.

Un interrupteur est un moyen simple et efficace pour modifier l'état de l'indicateur. Par exemple, l'interrupteur peut être configuré pour fermer un circuit électrique appartenant au dispositif de commande de sorte que ce dispositif de commande soit désactivé, entraînant un placement ou un maintien de l'indicateur dans le premier état. Corrélativement, un tel interrupteur peut être configuré pour ouvrir ce circuit de sorte que le dispositif de commande soit activé, entraînant un placement ou un maintien de l'indicateur dans le deuxième état.

Dans un mode de réalisation, l'indicateur peut être un indicateur visuel.

Selon une première variante d'indicateur visuel, celui-ci peut de préférence être lumineux.

De manière non limitative, l'indicateur lumineux peut être configuré pour générer une couleur d'alarme telle le rouge lorsque l'indicateur est dans le premier état, et pour ne générer aucun signal lumineux lorsque l'indicateur est dans le deuxième état. A cet effet, l'indicateur peut par exemple comprendre une diode électroluminescente émettant une telle couleur d'alarme lorsqu'elle est traversée par un courant électrique.

Selon une deuxième variante d'indicateur visuel, celui-ci peut comprendre un écran configuré pour afficher un message textuel.

Par exemple, lorsque l'indicateur est dans le premier état, il peut être affiché sur un tel écran un message textuel indiquant que le dispositif de verrouillage ou plus généralement que l'élément de nacelle correspondant n'est pas verrouillé, ce message n'étant pas affiché lorsque l'indicateur est dans le deuxième état.

L'invention a aussi pour objet un aéronef comprenant au moins un ensemble tel que défini ci-dessus.

Dans un mode de réalisation dans lequel l'aéronef comprend une cabine de pilotage, ledit indicateur de l'au moins un ensemble peut être configuré pour générer dans la cabine de pilotage un premier signal lorsque cet indicateur est dans le premier état et/ou un deuxième signal lorsque cet indicateur est dans le deuxième état.

Par exemple, l'indicateur peut être configuré pour générer dans la cabine de pilotage un signal prenant la forme d'une couleur d'alarme ou d'un message textuel lorsque l'indicateur est dans le premier état, et pour ne générer aucun signal lorsque l'indicateur est dans le deuxième état.

Dans un mode de réalisation, l'aéronef peut comprendre plusieurs ensembles tels que définis ci-dessus, l'indicateur de chacun de ces ensembles étant un indicateur commun à ces ensembles.

Il en résulte une simplification de l'opération de contrôle du verrouillage desdits premiers éléments de nacelle appartenant à ces différents ensembles, le verrouillage ou l'absence de verrouillage de ces premiers éléments de nacelle étant indiqués par un unique indicateur.

Dans un mode de réalisation, l'aéronef peut comprendre au moins un premier et un deuxième ensemble tels que définis ci-dessus, la clé du premier ensemble étant incompatible avec le dispositif de verrouillage et/ou le dispositif de commande du deuxième ensemble, la clé du deuxième ensemble étant incompatible avec le dispositif de verrouillage et/ou le dispositif de commande du premier ensemble.

Dans un mode de réalisation alternatif dans lequel l'aéronef comprend au moins un premier et un deuxième ensemble tels que définis ci-dessus, la clé du premier ensemble peut être compatible avec le dispositif de commande du deuxième ensemble et la clé du deuxième ensemble compatible avec le dispositif de commande du premier ensemble, les dispositifs de commande de ces ensembles étant configurés de sorte que le placement dans ledit deuxième état d'un indicateur commun à ces ensembles nécessite que chacun de ces dispositifs de commande soit activé.

L'invention a aussi pour objet un procédé de verrouillage d'un élément de nacelle d'un ensemble tel que défini ci-dessus, ce procédé comprenant :
- une étape de déplacement du dispositif de verrouillage de la position de déverrouillage à la position de verrouillage avec la clé,
- une étape de retrait de la clé du dispositif de verrouillage,
- une étape d'activation du dispositif de commande avec la clé.

L'invention a aussi pour objet un procédé de génération d'au moins un signal d'indication de la position d'un dispositif de verrouillage d'un ensemble tel que défini ci-dessus, ce procédé comprenant une étape de génération de l'au moins un signal lorsque le dispositif de commande de cet ensemble est désactivé et/ou activé.

Par exemple, ledit au moins un signal peut comprendre un premier et un deuxième signal, le premier signal étant généré lorsque le dispositif de commande est désactivé, l'au moins un deuxième signal étant généré lorsque le dispositif de commande est activé.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en perspective d'une nacelle d'ensemble propulsif d'aéronef, cette nacelle comprenant deux capots de soufflante en position de vol ;
[Fig. 2] est une vue schématique en perspective de la nacelle de la figure 1, les capots de soufflante étant en position de maintenance ;
[Fig. 3] est une vue schématique en coupe axiale d'un dispositif de verrouillage pour capot de nacelle d'ensemble propulsif d'aéronef ;
[Fig. 4] est une vue schématique d'un dispositif de commande d'un indicateur d'un ensemble conforme à l'invention, le dispositif de commande étant désactivé ;
[Fig. 5] est une vue schématique du dispositif de commande de la figure 4, le dispositif de commande étant activé.

### Description détaillée de modes de réalisation

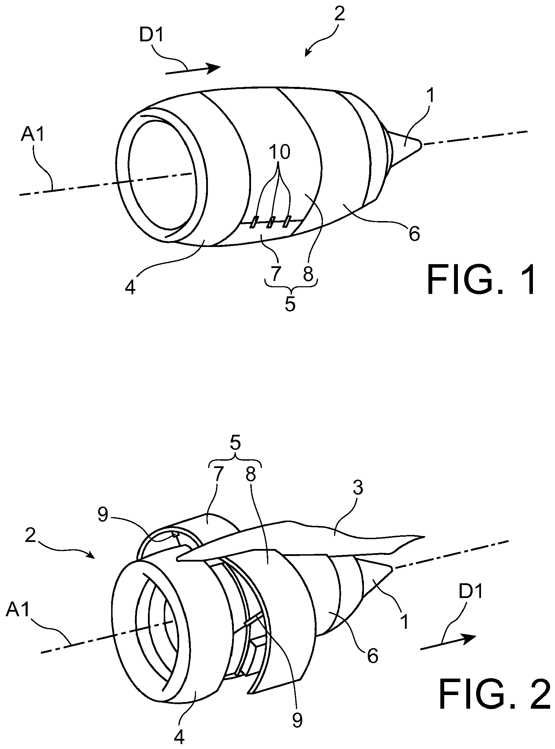

Il est représenté aux figures 1 et 2 un ensemble propulsif d'aéronef comprenant une turbomachine 1 et une nacelle 2 présentant un axe central longitudinal A1. Cet ensemble propulsif est destiné à être relié à la voilure de l'aéronef (non représenté) par l'intermédiaire d'un mât 3 partiellement représenté à la figure 2. A titre d'exemple non limitatif, la turbomachine 1 peut être un turboréacteur à double corps et à double flux.

Par la suite, les termes « amont » et « aval » sont définis par rapport à un sens D1 d'écoulement des gaz à travers l'ensemble propulsif lorsque celui-ci est propulsé.

De manière connue en soi, la nacelle 2 comprend de l'amont vers l'aval une entrée d'air 4, une section intermédiaire 5 entourant la soufflante (non représentée) de la turbomachine 1 et une section arrière 6 pouvant typiquement abriter des moyens d'inversion de poussée.

La section intermédiaire 5 comprend dans cet exemple deux capots de soufflante 7 et 8, mobiles entre une position de vol et une position de maintenance.

La figure 1 montre les capots 7 et 8 en position de vol dans laquelle ils sont fermés de manière à assurer une continuité aérodynamique avec l'entrée d'air 4 et la section arrière 6.

La figure 2 montre les capots 7 et 8 en position de maintenance dans laquelle ils sont ouverts, de manière à permettre à un opérateur de réaliser une opération de maintenance sur la turbomachine 1 sans démontage de la section intermédiaire 5.

Les capots 7 et 8 sont chacun articulés au niveau du mât 3 autour d'un axe sensiblement parallèle à l'axe central longitudinal A1, permettant leur déplacement entre les positions de vol et de maintenance.

Dans cet exemple, la nacelle 2 comprend des vérins 9 configurés pour déplacer les capots 7 et 8 de l'une à l'autre des positions de vol et de maintenance et les maintenir en position de maintenance.

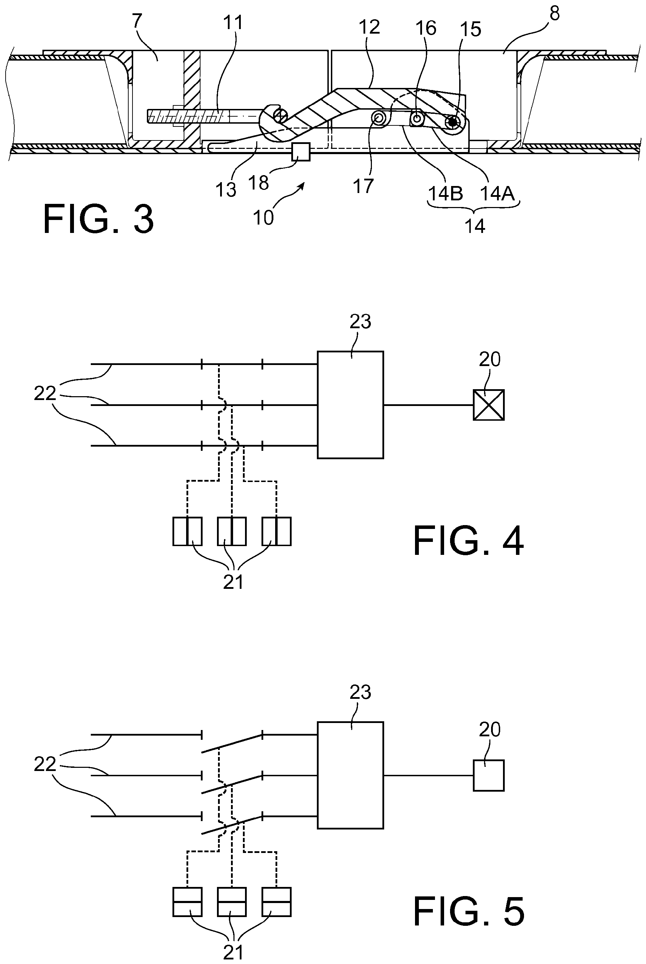

Pour maintenir et verrouiller les capots 7 et 8 en position de vol, en particulier au cours d'une mission de vol de l'aéronef, ceux-ci sont dans cet exemple équipés de trois dispositifs de verrouillage 10 tels que celui représenté à la figure 3.

Le dispositif de verrouillage 10 de la figure 3 comprend d'une part un élément d'amarrage 11 solidaire du capot 7 et, d'autre part, un crochet 12 et une poignée 13 reliés au capot 8 par l'intermédiaire d'une double biellette 14.

Plus précisément, le crochet 12 et la poignée 13 sont mobiles en rotation l'un par rapport à l'autre autour d'un axe de rotation 15 et sont portés par l'une des biellettes 14A laquelle est mobile en rotation autour d'un axe de rotation 16 par rapport à l'autre biellette 14B, cette dernière étant elle-même mobile en rotation par rapport au capot 8 autour d'un axe de rotation 17.

Un tel dispositif de verrouillage 10 permet de passer de la configuration d'enclenchement illustrée à la figure 3, dans laquelle le crochet 12 coopère avec l'élément d'amarrage 11, à une configuration de désenclenchement (non représentée) dans laquelle le crochet 12 et l'élément d'amarrage 11 sont désolidarisés l'un de l'autre, sous l'action d'un déplacement de la poignée 13 par rapport au capot 8.

La configuration de désenclenchement (non représentée) permet de déplacer les capots 7 et 8 l'un par rapport à l'autre afin de les placer dans la position de maintenance illustrée à la figure 2.

Pour bloquer le dispositif de verrouillage 10 dans la configuration d'enclenchement (figure 3) et éviter un déplacement intempestif des capots 7 et 8, par exemple sous l'action de vibrations auxquelles est soumise la nacelle 2 propulsée, le dispositif 10 comprend un verrou 18 à clé permettant de faire passer ce dispositif d'une position de verrouillage à une position de déverrouillage.

Dans cet exemple, le verrou 18 est configuré pour empêcher le déplacement de la poignée 13 par rapport au capot 7 lorsque le dispositif de verrouillage 10 est en position de verrouillage et pour autoriser un tel déplacement lorsque le dispositif de verrouillage 10 est en position de déverrouillage.

Ainsi, pour verrouiller les capots 7 et 8 en position de vol à partir d'une configuration initiale dans laquelle le dispositif de verrouillage 10 est en configuration de désenclenchement et en position de déverrouillage, la poignée 13 est actionnée de manière à faire coopérer le crochet 12 avec l'élément d'amarrage 11 afin de placer le dispositif de verrouillage 10 en configuration d'enclenchement, puis le dispositif de verrouillage 10 est placé en position de verrouillage à l'aide de la clé.

Réciproquement, pour déverrouiller les capots 7 et 8 afin de les placer en position de maintenance à partir d'une configuration initiale dans laquelle le dispositif de verrouillage 10 est en configuration d'enclenchement et en position de verrouillage, le dispositif de verrouillage 10 est placé en position de déverrouillage à l'aide de la clé puis la poignée 13 est actionnée de manière à désolidariser le crochet 12 de l'élément d'amarrage 11 afin de placer le dispositif de verrouillage 10 en configuration de désenclenchement.

Il résulte de ce qui précède que la clé est configurée pour coopérer avec le verrou 18 du dispositif de verrouillage 10 de manière à déplacer le dispositif de verrouillage 10 entre la position de verrouillage et la position de déverrouillage.

Pour des raisons de sécurité, le dispositif de verrouillage 10 est configuré de sorte que la clé ne puisse pas être retirée du verrou 18 lorsque ce dispositif est en position de déverrouillage, et plus spécifiquement pour autoriser un tel retrait uniquement lorsque le dispositif 10 est en position de verrouillage.

De plus, le dispositif de verrouillage 10 de la figure 3 ne peut être verrouillé que lorsqu'il est en configuration d'enclenchement, lorsque le crochet 12 et l'élément d'amarrage 11 sont solidarisés l'un avec l'autre.

Le dispositif de verrouillage 10 de la figure 3 est donné à titre d'exemple non limitatif. Tout autre dispositif de verrouillage 10 à clé conventionnel peut être utilisé, en conditionnant le retrait de la clé au placement du dispositif de verrouillage 10 en position de verrouillage.

Dans cet exemple, la clé de chacun des trois dispositifs de verrouillage 10 est incompatible avec les deux autres dispositifs de verrouillage 10.

L'invention se rapporte plus spécifiquement à un ensemble permettant de vérifier, via un indicateur 20 de préférence visuel, que les dispositifs de verrouillage 10 sont effectivement verrouillés.

Dans le mode de réalisation des figures 4 et 5, il est prévu trois interrupteurs 21 configurés pour commander un indicateur 20 commun.

Dans cet exemple, l'indicateur 20 est un voyant lumineux du type diode électroluminescente pouvant prendre deux états distincts.

Dans un premier état, le voyant lumineux 20 génère un signal lumineux, par exemple de couleur rouge. Dans un deuxième état, le voyant lumineux 20 ne génère aucun signal lumineux.

Chacun des interrupteurs 21 est configuré pour être déplacé entre une position de fermeture et une position d'ouverture, à l'aide de l'une respective des clés des dispositifs de verrouillage 10. Autrement dit, il est prévu dans cet exemple d'associer un interrupteur 21 à un dispositif de verrouillage 10 respectif, de sorte que la clé d'un dispositif de verrouillage 10 donné ne soit compatible qu'avec l'interrupteur 21 correspondant.

En référence à la figure 4 dans laquelle chacun des interrupteurs 21 est placé dans la position de fermeture, chacun de ces interrupteurs 21 autorise une circulation de courant électrique dans une branche 22 correspondante d'un circuit relié à l'indicateur 20 par l'intermédiaire d'un organe de computation 23.

En référence à la figure 5 dans laquelle chacun des interrupteurs 21 est placé dans la position d'ouverture, chacun de ces interrupteurs 21 ouvre la branche 22 correspondante de manière à y empêcher une circulation de courant électrique.

L'organe de computation 23 est configuré de sorte que le voyant lumineux 20 soit traversé par un courant électrique si et seulement si chacun des interrupteurs 21 est placé dans la position de fermeture.

Les interrupteurs 21, le circuit 22 et l'organe de computation 23 forment ainsi un dispositif de commande de l'indicateur 20, ce dispositif de commande pouvant être activé ou désactivé. Le dispositif de commande est désactivé lorsque l'un au moins des interrupteurs 21 est dans la position de fermeture, entraînant un placement ou un maintien de l'indicateur 20 dans le premier état (p. ex. génération d'un signal lumineux). Le dispositif de commande est activé lorsque tous les interrupteurs 21 sont dans la position d'ouverture, entraînant un placement ou un maintien de l'indicateur 20 dans le deuxième état (p. ex. pas de génération de signal lumineux).

Optionnellement, une clé ne peut pas être retirée d'un interrupteur 21 respectif lorsque celui-ci est dans la position d'ouverture. Ainsi, plus généralement, une clé ne peut pas être retirée du dispositif de commande lorsque celui-ci est activé et donc que l'indicateur 20 est dans le deuxième état.

Dans tous les cas, le retrait d'une clé de son interrupteur 21 entraîne un placement de cet interrupteur 21 en position de fermeture ou n'est possible que lorsque cet interrupteur 21 est en position de fermeture.

Un tel dispositif de commande permet de placer l'indicateur 20 dans le premier état (par exemple génération d'un signal lumineux) lorsque la clé de l'un au moins des dispositifs de verrouillage 10 n'est pas insérée dans le dispositif de commande, et donc a fortiori lorsque la clé est retenue dans le dispositif de verrouillage 10 correspondant en position de déverrouillage.

L'indicateur visuel 20 produit dans cet exemple un signal lumineux de couleur rouge représentant une alarme de non-verrouillage de l'ensemble des dispositifs de verrouillage 10, c'est-à-dire indiquant que l'un au moins des dispositifs de verrouillage 10 n'est pas verrouillé. Lorsque le voyant 20 est dans le deuxième état, l'absence de signal lumineux indique que tous les dispositifs de verrouillage 10 sont verrouillés.

L'état de l'indicateur 20 peut être associé à toute autre combinaison de stimuli. Par exemple, le voyant 20 peut générer un signal lumineux rouge lorsqu'il est dans le premier état et un signal lumineux vert lorsqu'il est dans le deuxième état.

De plus, l'indicateur 20 peut prendre toute autre forme. Par exemple, dans un mode de réalisation non représenté, l'indicateur 20 peut comprendre un écran indiquant textuellement que l'un au moins des dispositifs de verrouillage 10 n'est pas verrouillé lorsque le dispositif de commande est désactivé et/ou que tous les dispositifs de verrouillage 10 sont verrouillés lorsque le dispositif de commande est activé. Dans un autre mode de réalisation, l'indicateur 20 peut être un indicateur sonore.

Pour faciliter la procédure de vérification préalable à une mission de vol, l'indicateur 20 ainsi que le dispositif de commande sont placés dans la cabine de pilotage de l'aéronef.

En référence au mode de réalisation des figures 4 et 5, une procédure de verrouillage des capots 7 et 8 et de vérification de ce verrouillage comprend successivement :
- une étape de déplacement des dispositifs de verrouillage 10 de la position de déverrouillage à la position de verrouillage avec les clés correspondantes,
- une étape de retrait des clés de ces dispositifs de verrouillage 10,
- une étape d'insertion de ces clés dans les interrupteurs 21 correspondants du dispositif de commande,
- une étape de déplacement à l'aide de la clé correspondante de chacun des interrupteurs 21 de la position de fermeture à la position d'ouverture.

Dans le mode de réalisation décrit ci-dessus en référence aux figures 4 et 5, une clé donnée n'est compatible qu'avec un seul dispositif de verrouillage 10 et un seul interrupteur 21 correspondant, ce qui permet d'améliorer la sécurité de la procédure de verrouillage et de vérification de verrouillage. Bien entendu, l'invention peut être mise en oeuvre avec des clés interchangeables, compatibles avec plusieurs dispositifs de verrouillage 10 et plusieurs interrupteurs 21 correspondants.

En outre, l'indicateur 20 peut être un indicateur propre à un dispositif de commande comprenant un unique interrupteur 21, c'est-à-dire plus généralement à un dispositif de commande dont l'état peut être modifié par une unique clé d'un dispositif de verrouillage 10 correspondant, c'est-à-dire pouvant être activé et/ou désactivé avec cette unique clé (non représenté).

L'invention s'applique par ailleurs au verrouillage de tout autre élément de nacelle équipé d'un tel dispositif de verrouillage 10 à clé, cet élément de nacelle étant de préférence mobile. Par exemple, l'élément de nacelle à verrouiller peut être un élément mobile d'un inverseur de poussée de la nacelle 2 (non représenté).

## Revendications

1. Ensemble pour aéronef, cet ensemble comprenant :
- un premier élément de nacelle (7, 8) tel qu'un capot pouvant être placé dans une position de vol par rapport à un deuxième élément de nacelle (4, 6),
- un dispositif de verrouillage (10) mobile entre une position de verrouillage apte à maintenir le premier élément de nacelle (7, 8) en position de vol et une position de déverrouillage apte à libérer le premier élément de nacelle (7, 8),
- une clé configurée pour coopérer avec le dispositif de verrouillage (10) de manière à déplacer celui-ci entre la position de verrouillage et la position de déverrouillage, la clé pouvant être retirée du dispositif de verrouillage (10) uniquement lorsque celui-ci est en position de verrouillage,
- un indicateur (20) de position du dispositif de verrouillage (10), cet indicateur (20) pouvant prendre un premier et un deuxième état,
cet ensemble étant **caractérisé en ce qu'**il comprend un dispositif de commande (21, 22, 23) configuré pour être activé et/ou désactivé par ladite clé lorsque celle-ci est retirée du dispositif de verrouillage (10), l'activation du dispositif de commande (21, 22, 23) entraînant un passage de l'indicateur (20) du premier au deuxième état.

2. Ensemble selon la revendication 1, dans lequel le dispositif de commande (21, 22, 23) est configuré pour être activé et/ou désactivé par déplacement d'un élément (21) de ce dispositif de commande par la clé.

3. Ensemble selon la revendication 1 ou 2, dans lequel le dispositif de commande (21, 22, 23) comprend un interrupteur (21).

4. Ensemble selon l'une quelconque des revendications 1 à 3, dans lequel l'indicateur (20) est un indicateur visuel, de préférence lumineux.

5. Aéronef comprenant au moins un ensemble selon l'une quelconque des revendications précédentes.

6. Aéronef selon la revendication 5, cet aéronef comprenant une cabine de pilotage, ledit indicateur (20) de l'au moins un ensemble étant configuré pour générer dans la cabine de pilotage un premier signal lorsque cet indicateur (20) est dans le premier état et/ou un deuxième signal lorsque cet indicateur (20) est dans le deuxième état.

7. Aéronef selon la revendication 5 ou 6, cet aéronef comprenant plusieurs ensembles selon l'une quelconque des revendications 1 à 4, l'indicateur (20) de chacun de ces ensembles étant un indicateur commun à ces ensembles.

8. Aéronef selon l'une quelconque des revendications 5 à 7, cet aéronef comprenant au moins un premier et un deuxième ensemble selon l'une quelconque des revendications 1 à 4, la clé du premier ensemble étant incompatible avec le dispositif de verrouillage (10) et/ou le dispositif de commande (21, 22, 23) du deuxième ensemble, la clé du deuxième ensemble étant incompatible avec le dispositif de verrouillage (10) et/ou le dispositif de commande (21, 22, 23) du premier ensemble.

9. Procédé de verrouillage d'un élément de nacelle (7, 8) d'un ensemble selon l'une quelconque des revendications 1 à 4, ce procédé comprenant :
- une étape de déplacement du dispositif de verrouillage (10) de la position de déverrouillage à la position de verrouillage avec la clé,
- une étape de retrait de la clé du dispositif de verrouillage (10),
- une étape d'activation du dispositif de commande (21, 22, 23) avec la clé.

10. Procédé de génération d'au moins un signal d'indication de la position d'un dispositif de verrouillage (10) d'un ensemble selon l'une quelconque des revendications 1 à 4, ce procédé comprenant une étape de génération de l'au moins un signal lorsque le dispositif de commande (21, 22, 23) de cet ensemble est désactivé et/ou activé.

## Patentansprüche

1. Baugruppe für ein Flugzeug, wobei diese Baugruppe umfasst:
- ein erstes Gondelelement (7, 8), wie eine Abdeckung, die in Bezug auf ein zweites Gondelelement (4, 6) in einer Flugposition platziert werden kann,
- eine Verriegelungsvorrichtung (10), die zwischen einer Verriegelungsposition, die imstande ist, das erste Gondelelement (7, 8) in Flugposition zu halten, und einer Entriegelungsposition, die imstande ist, das erste Gondelelement (7, 8) freizugeben, beweglich ist,
- einen Schlüssel, der konfiguriert ist, um mit der Verriegelungsvorrichtung (10) derart zusammenzuwirken, um dieses zwischen der Verriegelungsposition und der Entriegelungsposition zu verschieben, wobei der Schlüssel von der Verriegelungsvorrichtung (10) nur dann abgezogen werden kann, wenn diese in der Verriegelungsposition ist,
- einen Indikator (20) für eine Position der Verriegelungsvorrichtung (10), wobei dieser Indikator (20) einen ersten und einen zweiten Zustand einnehmen kann,
wobei diese Baugruppe **dadurch gekennzeichnet ist, dass** sie eine Steuerungsvorrichtung (21, 22, 23) umfasst, die konfiguriert ist, um durch den Schlüssel aktiviert und/oder deaktiviert zu werden, wenn dieser von der Verriegelungsvorrichtung (10) abgezogen ist, wobei die Aktivierung der Steuerungsvorrichtung (21, 22, 23) einen Übergang des Indikators (20) vom ersten in den zweiten Zustand bewirkt.

2. Baugruppe nach Anspruch 1, wobei die Steuerungsvorrichtung (21, 22, 23) konfiguriert ist, um durch Verschieben eines Elements (21) dieser Steuerungsvorrichtung durch den Schlüssel aktiviert und/oder deaktiviert zu werden.

3. Baugruppe nach Anspruch 1 oder2, wobei die Steuerungsvorrichtung (21, 22, 23) einen Schalter (21) umfasst.

4. Baugruppe nach einem der Ansprüche 1 bis 3, wobei der Indikator (20) ein optischer, vorzugsweise ein Leuchtindikator ist.

5. Flugzeug, das mindestens eine Baugruppe nach einem der vorstehenden Ansprüche umfasst.

6. Flugzeug nach Anspruch 5, wobei dieses Flugzeug ein Cockpit umfasst, wobei der Indikator (20) der mindestens einen Baugruppe konfiguriert ist, um in dem Cockpit ein erstes Signal zu erzeugen, wenn dieser Indikator (20) in dem ersten Zustand ist und/oder ein zweites Signal, wenn dieser Indikator (20) in dem zweiten Zustand ist.

7. Flugzeug nach Anspruch 5 oder 6, wobei dieses Flugzeug mehrere Baugruppen nach einem der Ansprüche 1 bis 4 umfasst, wobei der Indikator (20) einer jeden dieser Baugruppen ein Indikator ist, der diesen Baugruppe gemeinsam ist.

8. Flugzeug nach einem der Ansprüche 5 bis 7, wobei dieses Flugzeug mindestens eine erste und eine zweite Baugruppe nach einem der Ansprüche 1 bis 4 umfasst, wobei der Schlüssel der ersten Baugruppe mit der Verriegelungsvorrichtung (10) und/oder der Steuerungsvorrichtung (21, 22, 23) der zweiten Baugruppe inkompatibel ist, wobei der Schlüssel der zweiten Baugruppe mit der Verriegelungsvorrichtung (10) und/oder der Steuerungsvorrichtung (21, 22, 23) der ersten Baugruppe inkompatibel ist.

9. Verfahren zum Verriegeln eines Gondelelements (7, 8) einer Baugruppe nach einem der Ansprüche 1 bis 4, wobei dieses Verfahren umfasst:
- einen Schritt des Verschiebens der Verriegelungsvorrichtung (10) von der Entriegelungsposition in die Verriegelungsposition mit dem Schlüssel,
- einen Schritt des Abziehens des Schlüssels von der Verriegelungsvorrichtung (10),
- einen Schritt des Aktivierens der Steuerungsvorrichtung (21, 22, 23) mit dem Schlüssel.

10. Verfahren zum Erzeugen mindestens eines Indikationssignals für die Position einer Verriegelungsvorrichtung (10) einer Baugruppe nach einem der Ansprüche 1 bis 4, wobei dieses Verfahren einen Schritt des Erzeugens des mindestens einen Signals umfasst, wenn die Steuerungsvorrichtung (21, 22, 23) dieser Baugruppe deaktiviert und/oder aktiviert ist.

## Claims

1. Assembly for aircraft, this assembly comprising:
- a first nacelle element (7, 8) such as a cowl that can be placed in a flight position in relation to a second nacelle element (4, 6),
- a locking device (10) moveable between a locking position able to maintain the first nacelle element (7, 8) in flight position and an unlocking position able to release the first nacelle element (7, 8),
- a key configured to cooperate with the locking device (10) in such a way as to move it between the locking position and the unlocking position, the key being able to be withdrawn from the locking device (10) only when it is in locking position,
- an indicator (20) for indicating the position locking device (10), this indicator (20) being able to take a first and second state,
this assembly being **characterised in that** it comprises a control device (21, 22, 23) configured to be activated and/or deactivated by said key when it is withdrawn from the locking device (10), the activation of the control device (21, 22, 23) resulting in moving the indicator (20) from the first to the second state.

2. Assembly according to claim 1, wherein the control device (21, 22, 23) is configured to be activated and/or deactivated by moving an element (21) of this control device by the key.

3. Assembly according to claim 1 or 2, wherein the control device (21, 22, 23) comprises a switch (21).

4. Assembly according to any one of claims 1 to 3, wherein the indicator (20) is a visual indicator, preferably a light indicator.

5. Aircraft comprising at least one assembly according to any one of the preceding claims.

6. Aircraft according to claim 5, this aircraft comprising a cockpit, said indicator (20) of the at least one assembly being configured to generate in the cockpit a first signal when this indicator (20) is in the first state and/or a second signal when this indicator (20) is in the second state.

7. Aircraft according to claim 5 or 6, this aircraft comprising a plurality of assemblies according to any one of claims 1 to 4, the indicator (20) of each of these assemblies being an indicator common to these assemblies.

8. Aircraft according to any one of claims 5 to 7, this aircraft comprising at least one first and one second assembly according to any one of claims 1 to 4, the key of the first assembly being incompatible with the locking device (10) and/or the control device (21, 22, 23) of the second assembly, the key of the second assembly being incompatible with the locking device (10) and/or the control device (21, 22, 23) of the first assembly.

9. Method for locking a nacelle element (7, 8) of an assembly according to any one of claims 1 to 4, this method comprising:
- a step of moving the locking device (10) from the unlocking position to the locking position with the key,
- a step of withdrawing the key from the locking device (10),
- a step of activating the control device (21, 22, 23) with the key.

10. Method for generating at least one signal for indicating the position of a locking device (10) of an assembly according to any one of claims 1 to 4, this method comprising a step of generating at least one signal when the control device (21, 22, 23) of this assembly is deactivated and/or activated.
